# EUROPEAN PATENT SPECIFICATION

(11) **EP 4 063 094 B1**
(45) Date of publication and mention of the grant of the patent: **13.09.2023**
(21) Application number: 22160955.5
(22) Date of filing: 09.03.2022
(51) Int. Cl.: B29C 44/36, B05B 7/00

(54) **POLYURETHANE FOAMING PLANT FOR ROLLER SHUTTER SLATS**
POLYURETHANSCHÄUMUNGSANLAGE FÜR ROLLADENLAMELLEN
INSTALLATION DE MOUSSAGE DE POLYURÉTHANE POUR LATTES DE VOLETS ROULANTS

(30) Priority: 23.03.2021 IT 202100006986
(43) Date of publication of application: 28.09.2022
(73) Proprietor: Dallan S.p.A., 31033 Castelfranco Veneto (Treviso) (IT)
(72) Inventor: DALLAN, Andrea, I-31033 Castelfranco Veneto, TREVISO (IT)
(74) Representative: Zanettin, Gianluigi

(56) References cited:
- EP-A1- 3 112 115
- US-A- 3 872 199
- US-A- 4 426 348
- US-A1- 2004 123 934
- US-A1- 2014 264 997
- US-A1- 2019 358 869

## Description

### Field of application

The subject of the present invention is a polyurethane foaming plant for roller shutter slats.

### Prior art

As is well known, roller shutters are made up of a plurality of elongated profiles, called slats, connected together longitudinally to form a curtain articulated along the connecting edges between one profile and the other.

Generally, the slats are hollow box bodies made of metal and/or plastic. The slats are filled internally with polyurethane foam to increase their structural strength as well as their thermal insulation capacity. Shutter production lines, therefore, comprise a polyurethane foaming plant for the slats.

The polyurethane foaming process requires the reagents (isocyanate and polyol) to be mixed together substantially only at the time of injection into the slat. The reagents are mixed in a mixing chamber associated with the injection nozzle so that polyurethane foam is essentially formed only within the slat. The mixing chamber and injection nozzle form the foaming head.

Isocyanate and polyol react very quickly with each other to form polyurethane foam and therefore may not be mixed too far upstream of the injection nozzle. In fact, there would not be enough time to expel the mixture and avoid an uncontrolled formation of polyurethane foam inside the plant with the consequent obstruction of the ducts.

At the end of each foaming cycle, the foaming head must be cleaned by a stream of an appropriate aqueous cleaning solution to prevent the polyurethane from solidifying inside. For this purpose, the foaming head is fluidically connectable to a tank of said aqueous solution.

A polyurethane foaming plant for roller shutter slats therefore comprises:
- a foaming head, movable inside the plant;
- a foaming area, where the slats with open profile are made to transit in order to receive the polyurethane foam from the foaming head positioned at the foaming area;
- a cleaning area, where the foaming head is positioned at the end of each foaming cycle for cleaning and/or replacement;
- separate tanks for isocyanate and polyol; and
- separate feeding systems for polyol and isocyanate, each of which comprises a pipeline connecting its tank to the foaming head, with the corresponding movement pump, heating device, and flow control device.

The slats may be foamed with high density polyurethane or low density polyurethane. Switching from one type of polyurethane to another requires mixing the isocyanate with a different type of polyol, high density in the first case and low density in the second case. US4426348 A discloses a polyurethane foaming plant as in the preamble of Claim 1.

To be able to perform both types of foaming, the plants are equipped with two tanks for polyol, one for high density polyol and one for low density polyol. Generally, the two polyol feed systems flow into a common duct connected to the foaming head. The feed alternation is regulated by a three-way valve.

The use of one polyurethane over the other depends on the production batch of the slats. It is not uncommon in the same plant to change the polyurethane several times in a day.

Switching from one type of polyol to the other requires stopping the plant, cleaning the foaming head or replacing it, operating the three-way valve, and then reactivating the plant. At restart, the polyol-isocyanate mixture will not immediately be of the correct quality, as there will be residues of the previous polyol and will therefore need to be purged.

The polyurethane change operations therefore involve significant downtime in the production process. Such downtime becomes particularly burdensome in highly automated production lines, which are structured to offer high flexibility and ensure high production rates.

Secondly, changing the polyurethane results in wasted reagents due to the need to purge the first quantities of mixture produced.

In the field of shutter production there is therefore the need to provide foaming plants for slats that allow the downtime related to changing the type of polyurethane to be produced to be significantly reduced and, secondly, to allow for the quantity of reagents wasted at the time of changing the type of polyurethane to be reduced.

### Disclosure of the invention

Therefore, the main object of the present invention is to eliminate in whole or in part the drawbacks of the aforementioned prior art by providing a foaming plant for roller shutter slats that allows the downtime associated with changing the type of polyurethane to be produced to be significantly reduced.

A further object of the present invention is to provide a foaming plant for roller shutter slats that allows for the quantity of reagents wasted when changing the type of polyurethane to be produced to be significantly reduced.

A further object of the present invention is to provide a foaming plant for roller shutter slats that is operationally simple to control.

A further object of the present invention is to provide a foaming plant for roller shutter slats that has implementation costs comparable to those of conventional plants.

### Brief description of the drawings

The technical features of the invention, according to the aforesaid objects, may be clearly seen in the content of the claims below, and its advantages will become more readily apparent in the detailed description that follows, made with reference to the accompanying drawings, which illustrate one or more purely exemplifying and non-limiting embodiments thereof, in which:
- Fig. 1 shows a front orthogonal view of a foaming plant for roller shutter slats according to a preferred embodiment of the invention;
- Fig. 2, 3, and 4 show the plant of Fig. 1 illustrated with the foaming heads in different operating positions; and
- Fig. 5 shows an orthogonal plan view of a foaming plant for roller shutter slats according to a preferred embodiment of the invention.

### Detailed description

A foaming plant for roller shutter slats according to the invention has been indicated collectively with 1 in the attached figures.

Here and in the remainder of the description and the claims, reference will be made to the plant 1 in the condition of use. Therefore, any references to a lower or upper position or to a horizontal or vertical orientation should be interpreted in this condition.

According to a general embodiment of the invention, the polyurethane foaming plant 1 for roller shutter slats comprises:
- A system 10 for the production and dispensing of polyurethane foam from the mixing of isocyanate and polyol; and
- A foaming area 2, where slats in use are passed through to receive polyurethane foam from the polyurethane foam production and dispensing system 10.

In particular, as illustrated in the appended figures, the slats traverse the aforementioned foaming area 2 along a transit direction X (which in the appended figures is perpendicular to the plane of said figure). Preferably, the foaming area 2 is provided with a support structure 2a for the slats, comprising means for guiding and positioning the slats along said transit direction X. In this way, the slats are forced to follow a predefined path within the foaming area 2.

According to the invention, as illustrated in the appended figures, the polyurethane foam production and dispensing system 10 comprises two distinct foaming heads 11 and 12.

A first foaming head 11 is fluidically connected to an isocyanate tank 33 and a low density polyol tank 31 to produce and dispense low density polyurethane foam.

A second foaming head 12 is fluidically connected to an isocyanate tank 33 and a high density polyol tank 32 to produce and dispense high density polyurethane foam.

According to the invention, the plant 1 comprises a system 20 for moving the aforesaid two distinct foaming heads 11 and 12 within the plant 1.

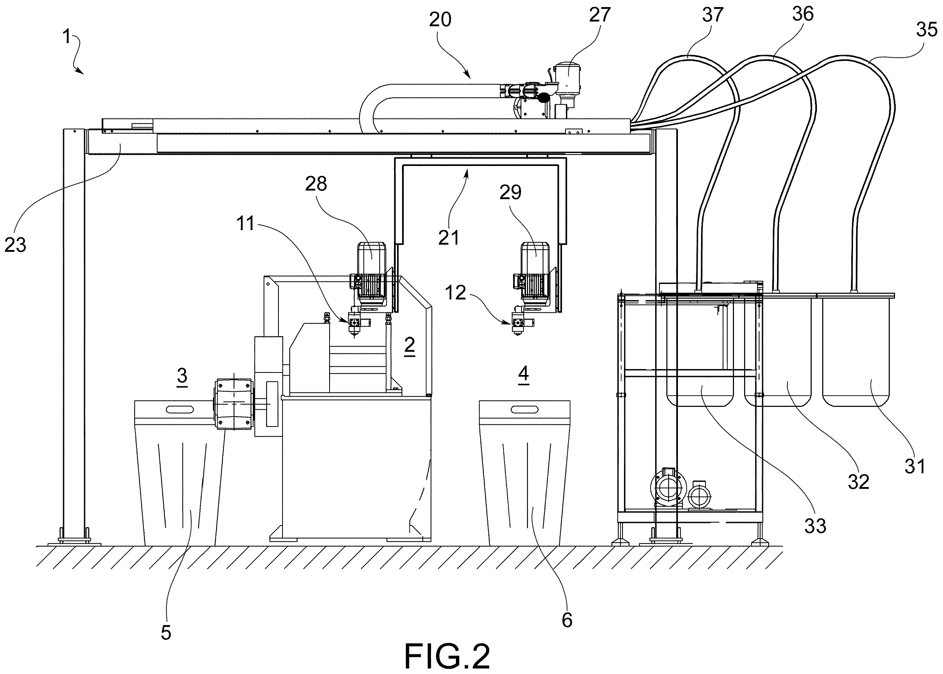

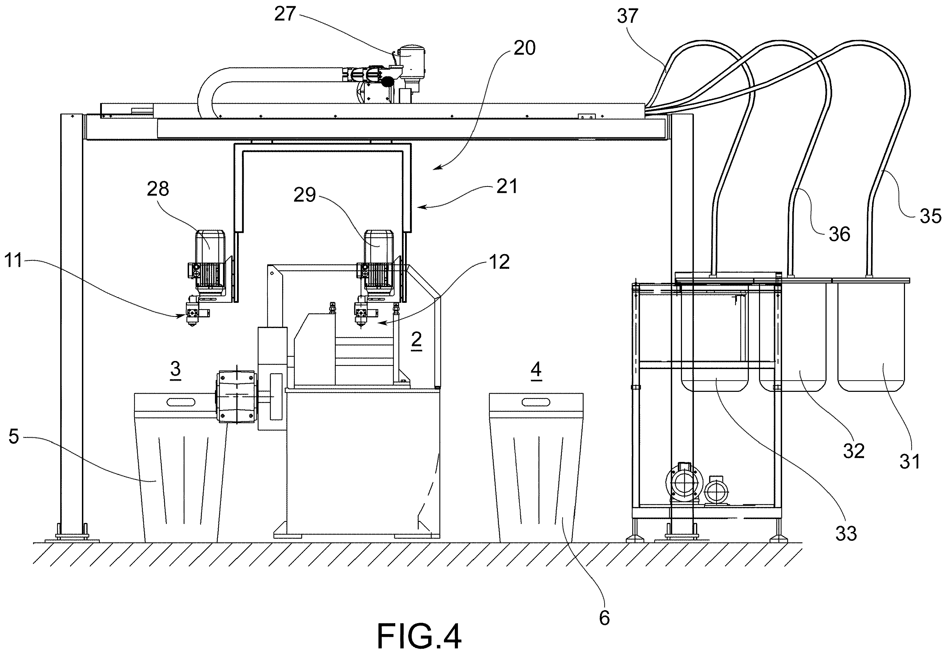

The aforesaid movement system 20 is suitable for positioning alternately one of the two foaming heads 11 or 12 in said foaming area 2 (see Fig. 2 and 4) as a function of the foaming requirements of the slats in transit through the foaming area 2.

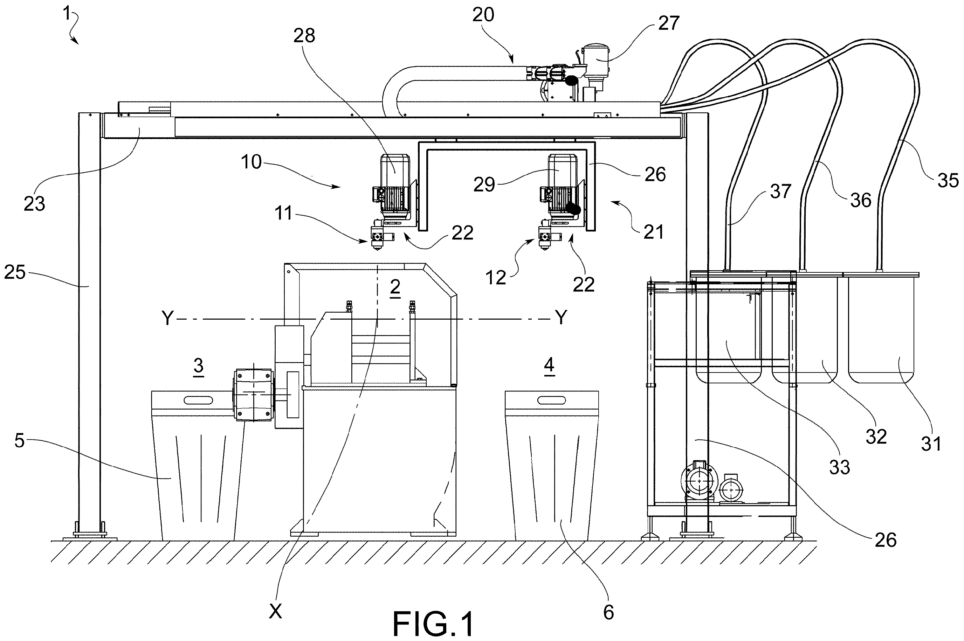

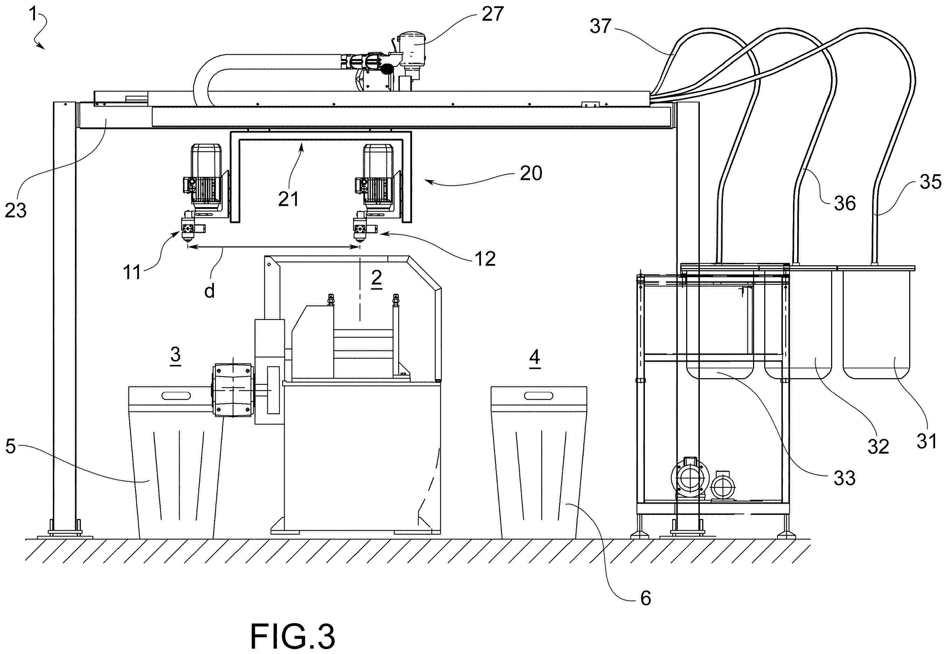

Operationally, depending on the type of polyurethane (high or low density) required for foaming the slats in transit, either the first head 11 (Fig. 1 and 2) or the second head 12 (Fig. 3 and 4) is positioned at the foaming area 2.

The foaming head 11 or 12, which is to replace the head in the foaming area that has just completed the foaming cycle, is already ready for use without the need for any particular intervention. The head that is to replace the one in use is in fact in stand-by and has already been serviced (cleaned or replaced) at the end of the previous foaming cycle. Therefore, the change of polyurethane is not slowed down by maintenance operations of the foaming head called into operation.

Further, since each foaming head always treats the same type of polyol (low or high density), the mixture of the reagents produced may be used immediately, with no need to purge the initial quantities. This not only avoids reagent waste, but also helps to further reduce downtime.

Due to the invention, the downtime required for switching from one polyurethane foam to another is thus significantly reduced.

Furthermore, due to the invention, it is possible to reduce, if not substantially eliminate, the quantity of reagents wasted when changing the type of polyurethane to be produced.

The foaming heads 11, 12 are known per se to a person skilled in the art and will therefore not be described in detail.

More specifically, each foaming head 11, 12 may comprise a mixing chamber associated with an injection nozzle. The mixing chamber is fluidically connected to the isocyanate tank 33 and a polyol tank (low density 31 or high density 32) via a feeding system. The feeding system is configured so that the two reagents (isocyanate and polyol) enter the mixing chamber at the same time in the correct ratio to form the polyurethane foam. Preferably, the mixing chamber is further fluidically connected to a cleaning liquid tank 34. The feeding system is configured so that the cleaning liquid is fed to the mixing chamber as an alternative to the two reagents (isocyanate and polyol) to allow washing and cleaning operations to be performed at the end of each foaming cycle.

More specifically, the first foaming head 11 is fluidically connected:
- to the low density polyol tank 31 via an independent feed system, shown in the figures with the first duct 35, equipped with a flow control valve (not shown);
- to the isocyanate tank 33 via an independent feed system, shown in the figures with the third duct 37, equipped with a flow control valve (not shown);
- to the cleaning liquid tank 34 via an independent feed system, shown in the figures with the fourth duct 38, equipped with a flow control valve (not shown).

The second foaming head 12 is fluidically connected:
- to the high density polyol tank 32 via an independent feed system, shown in the figures with the second duct 36, equipped with a flow control valve (not shown);
- to the isocyanate tank 33 via an independent feed system, shown in the figures with the third duct 37, equipped with a flow control valve (not shown);
- to the cleaning liquid tank 34 via an independent feed system, shown in the figures with the fourth duct 38, equipped with a flow control valve (not shown).

The two foaming heads 11 and 12 may be fluidically connected to the same isocyanate tank 33, which is thus common to both. Alternatively, each foaming head may be fluidically connected independently to its own isocyanate tank 33.

Similarly, the two foaming heads 11 and 12 may be fluidically connected to the same cleaning liquid tank 38, which is thus common to both. Alternatively, each foaming head may be fluidically connected independently to its own cleaning liquid tank 38.

Preferably, said movement system 20 is suitable for moving the two foaming heads 11 and 12 simultaneously and in such a way that, when one of the two foaming heads 11 or 12 is positioned at the foaming area 2, the other foaming head 12 or 11 is positioned at a service area 3 or 4, which is dedicated to the maintenance and cleaning of the foaming head 12 or 11.

This service area is inside the plant 1 and is separate from the foaming area 2 in a position adjacent thereto. In this way, when the polyurethane is changed, the head that has reached the end of the cycle and is removed from the foaming area is immediately taken to the service area to be serviced/cleaned, thus preventing the polyurethane from solidifying inside.

Advantageously, the plant 1 comprises two distinct service areas 3 and 4. A first service area 3 is intended to receive the first foaming head 11, and a second service area 4 is intended to receive the second foaming head 12.

In particular, each service area 3 and 4 is defined by a space within the foaming plant 1 and may be provided with a container 5 or 6 for collecting fluids generated by washing/cleaning the foaming head.

Advantageously, as illustrated in the appended figures, the foaming area 2 is arranged between the aforesaid two distinct service areas 3 and 4. The two service areas 3 and 4 are arranged on opposite sides of the foaming area 2 with respect to a transit direction X of the slats through the aforesaid foaming area 2.

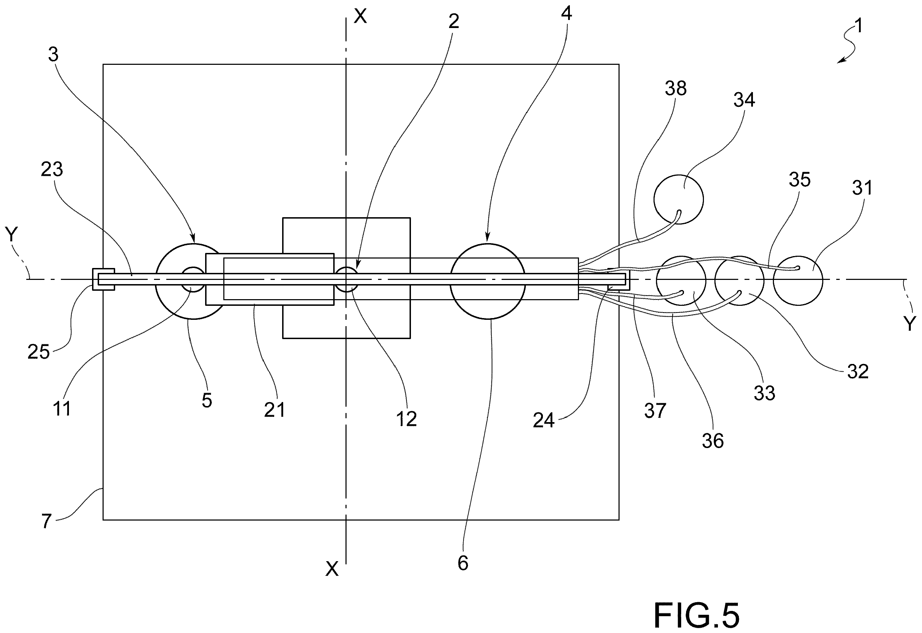

Preferably, as illustrated for example in Fig. 5, said two distinct service areas 3, 4 are substantially aligned with each other and with said foaming area 2 along a direction Y transverse to said transit direction X.

According to a preferred embodiment illustrated in the appended figures, the system 20 for moving the two distinct foaming heads 11 and 12 comprises a movable support structure 21 to which both foaming heads 11, 12 are associated and which is movable above the foaming area 2 and the two service areas 3, 4 along said transverse direction Y.

Advantageously, the two foaming heads 11, 12 are associated with the aforesaid movable support structure 21 at two positions spaced apart along the transverse direction Y.

Preferably, the distance D between the two foaming heads 11, 12 in the transverse direction is selected as a value substantially equivalent to the distance existing between each of the two service areas 3, 4 and the foaming area 2 along the transverse direction Y. Thus, when one of the two foaming heads 11 or 12 is positioned at the foaming area 2, the other foaming head 12 or 11 is automatically positioned at the respective service area 3 or 4.

Advantageously, the system 20 for moving the two foaming heads may comprise means 22 for vertically moving the foaming heads 11 and 12 with respect to the movable support structure 21 such that said two foaming heads may be raised or lowered when positioned above the foaming area 2 or respective service area 3, 4. This facilitates the movement of the foaming heads within the plant 1.

According to the embodiment illustrated in the appended figures, the system 20 for moving the two distinct foaming heads 11 and 12 may comprise a support gantry, defined by a horizontal beam 23 supported by two columns 24 and 25. The movable support structure 21 may comprise a frame 26 slidingly associated with the beam 23 via a carriage. The movement system comprises: - first drive means 27 suitable for moving the movable support structure 21 along the beam 23 in the transverse direction Y; - second drive means 28 and 29 suitable for moving the two heads 11, 12 vertically with respect to the movable support structure 21.

Advantageously, the foaming plant 1 comprises a protection cabin 7 suitable for shielding the foaming area 2 and the two service areas 3, 4. The protective cabin 7 comprises access doors to the two service areas 3, 4. Preferably, said access doors are automated in opening and closing to allow safe access to the foaming head that is not in the foaming area.

Advantageously, the foaming plant 1 may comprise a control system (not illustrated in the appended figures) designed to control automatically and coordinately the operational phases (movement, foaming, and cleaning) of the two foaming heads 11 and 12.

The invention allows numerous advantages to be obtained, which have already been described in part.

The foaming plant 1 for roller shutter slats according to the invention makes it possible to significantly reduce the downtime associated with changing the type of polyurethane to be produced.

The foaming plant 1 for roller shutter slats according to the invention makes it possible to reduce the quantity of reagents wasted when changing the type of polyurethane to be produced.

The foaming plant 1 for roller shutter slats according to the invention is operationally simple to control.

The foaming plant 1 for roller shutter slats according to the invention has implementation costs comparable to those of conventional plants.

The invention thus conceived therefore achieves its intended objects.

Obviously, in its practical embodiment it may also assume different forms and configurations from the one illustrated above, without thereby departing from the present scope of protection.

Furthermore, all details may be replaced with technically equivalent elements, and the dimensions, shapes, and materials used may be any according to the needs.

## Claims

1. Polyurethane foaming plant (1) for roller shutter slats, comprising:
- a system (10) for producing and dispensing polyurethane foam by mixing isocyanate and polyol; and
- a foaming area (2), where, in use, the slats are made to transit in order to receive the polyurethane foam from the production and dispensing system (10) of polyurethane foam,
wherein the system (10) for producing and dispensing polyurethane foam comprises two separate foaming heads (11; 12), wherein a first foaming head (11) is fluidically connected to an isocyanate tank (33) and a low density polyol tank (31) to produce and dispense low density polyurethane foam, and wherein a second foaming head (12) is fluidically connected to an isocyanate tank (33) and a high density polyol tank (32) to produce and dispense high density polyurethane foam,
**characterized in that** said plant (1) comprises a system (20) for moving said two distinct foaming heads (11; 12) inside said plant (1), wherein said movement system (20) is suitable for positioning at said foaming area (2) alternately one of said two foaming heads (11; 12) according to the foaming requirements of the slats in transit through said foaming area (2).

2. The plant (1) according to claim 1, wherein said movement system (20) is suitable for moving the two foaming heads (11; 12) simultaneously and in such a way that, when one of the two foaming heads (11; 12) is positioned at said foaming area (2) the other foaming head (12; 11) is positioned at a service area (3, 4), which is inside the plant (1) and is dedicated to the maintenance of the foaming head (11, 12).

3. The plant (1) according to claim 2, wherein said plant (1) comprises two distinct service areas (3, 4), wherein a first service area (3) is intended to receive said first foaming head (11) and a second service area (4) is intended to receive said second foaming head (12).

4. The plant (1) according to claim 3, wherein said foaming area (2) is placed between said two distinct service areas (3, 4) and wherein said two distinct service areas (3, 4) are placed on opposite sides of said foaming area (2) with respect to a transit direction (X) of the slats through said foaming area (2).

5. The plant (1) according to claim 4, wherein said two distinct service areas (3, 4) are substantially aligned with each other and with said foaming area (2) in a direction (Y) transverse to said transit direction (X).

6. The plant (1) according to claim 5, wherein the system (20) for moving said two distinct foaming heads (11; 12) comprises a movable support structure (21) to which both said two foaming heads (11, 12) are associated and which is movable above said foaming area (2) and said two service areas (3, 4) along said transverse direction (Y), and wherein said two foaming heads (11, 12) are associated to said movable support structure (21) in two positions spaced apart from each other along said transverse direction (Y).

7. The plant (1) according to claim 6, wherein the system (20) for moving said two distinct foaming heads (11; 12) comprises means (22) for vertically moving said two distinct foaming heads (11; 12) relative to said movable support structure (21) such that said two foaming heads (11; 12) can be raised or lowered when positioned above the foaming area (2) or respective service area (3, 4) .

8. The plant (1) according to any of the preceding claims, wherein the two foaming heads (11; 12) are fluidically connected to the same isocyanate tank (33).

9. The plant (1) according to any of the claims from 1 to 8, wherein each of the two foaming heads (11; 12) is fluidically independently connected to its own isocyanate tank (33).

## Patentansprüche

1. Polyurethan-Schäumungsanlage (1) für Rollladenlamellen, umfassend:
- einem System (10) zur Herstellung und Abgabe von Polyurethanschaum durch Mischen von Isocyanat und Polyol; und
- einen Schäumungsbereich (2), den die Lamellen im Betrieb durchlaufen, um den Polyurethanschaum aus dem System (10) zur Herstellung und Abgabe von Polyurethanschaum aufzunehmen,
wobei das System (10) zur Herstellung und Abgabe von Polyurethanschaum zwei separate Schäumungsköpfe (11; 12) umfasst, wobei ein erster Schäumungskopf (11) strömungstechnisch mit einem Isocyanat-Tank (33) und einem Polyol-Tank (31) mit niedriger Dichte verbunden ist, um Polyurethanschaum mit niedriger Dichte herzustellen und abzugeben, und wobei ein zweiter Schäumungskopf (12) strömungstechnisch mit einem Isocyanat-Tank (33) und einem Polyol-Tank (32) mit hoher Dichte verbunden ist, um Polyurethanschaum mit hoher Dichte herzustellen und abzugeben, **dadurch gekennzeichnet, dass** die Anlage (1) ein System (20) zum Bewegen der zwei verschiedenen Schäumungsköpfe (11; 12) innerhalb der Anlage (1) umfasst, wobei das Bewegungssystem (20) geeignet ist, in dem Schäumungsbereich (2) abwechselnd einen der beiden Schäumungsköpfe (11; 12) entsprechend den Schäumungsanforderungen der durch den Schäumungsbereich (2) laufenden Lamellen zu positionieren.

2. Anlage (1) nach Anspruch 1, wobei das Bewegungssystem (20) geeignet ist, die beiden Schäumungsköpfe (11; 12) gleichzeitig und so zu bewegen, dass, wenn einer der beiden Schäumungsköpfe (11; 12) in dem Schäumungsbereich (2) positioniert ist, der andere Schäumungskopf (12; 11) in einem Wartungsbereich (3, 4) positioniert ist, der sich innerhalb der Anlage (1) befindet und der Wartung des Schäumungskopfes (11, 12) dient.

3. Anlage (1) nach Anspruch 2, wobei die Anlage (1) zwei getrennte Wartungsbereiche (3, 4) umfasst, wobei ein erster Wartungsbereich (3) dazu bestimmt ist, den ersten Schäumungskopf (11) aufzunehmen, und ein zweiter Wartungsbereich (4) dazu bestimmt ist, den zweiten Schäumungskopf (12) aufzunehmen.

4. Anlage (1) nach Anspruch 3, wobei der Schäumungsbereich (2) zwischen den beiden getrennten Wartungsbereichen (3, 4) angeordnet ist und wobei die beiden getrennten Wartungsbereiche (3, 4) auf gegenüberliegenden Seiten des Schäumungsbereichs (2) in Bezug auf eine Durchlaufrichtung (X) der Lamellen durch den Schäumungsbereich (2) angeordnet sind.

5. Anlage (1) nach Anspruch 4, wobei die beiden getrennten Wartungsbereiche (3, 4) im Wesentlichen miteinander und mit dem Schäumungsbereich (2) in einer Querrichtung (Y) zu der Durchlaufrichtung (X) ausgerichtet sind.

6. Anlage (1) nach Anspruch 5, wobei das Bewegungssystem (20) der beiden getrennten Schäumungsköpfe (11; 12) eine bewegliche Tragstruktur (21) umfasst, mit der die beiden Schäumungsköpfe (11, 12) verbunden sind und die über dem Schäumungsbereich (2) und den beiden Wartungsbereichen (3, 4) entlang der Querrichtung (Y) beweglich ist, und wobei die beiden Schäumungsköpfe (11, 12) mit der beweglichen Tragstruktur (21) in zwei entlang der Querrichtung (Y) voneinander beabstandeten Positionen verbunden sind.

7. Anlage (1) nach Anspruch 6, wobei das Bewegungssystem (20) der beiden getrennten Schäumungsköpfe (11; 12) Mittel (22) zum vertikalen Bewegen der beiden getrennten Schäumungsköpfe (11; 12) relativ zu der beweglichen Tragstruktur (21) umfasst, so dass die beiden Schäumungsköpfe (11; 12) angehoben oder abgesenkt werden können, wenn sie über dem Schäumungsbereich (2) oder dem jeweiligen Wartungsbereich (3, 4) positioniert sind.

8. Anlage (1) nach einem der vorhergehenden Ansprüche, wobei die beiden Schäumungsköpfe (11; 12) mit demselben Isocyanat-Tank (33) strömungstechnisch verbunden sind.

9. Anlage (1) nach einem der Ansprüche 1 bis 8, wobei jeder der beiden Schäumungsköpfe (11; 12) strömungstechnisch unabhängig mit seinem eigenen Isocyanat-Tank (33) verbunden ist.

## Revendications

1. Installation de moussage de polyuréthane (1) pour lattes de volets roulants, comprenant :
- un système (10) pour produire et distribuer une mousse de polyuréthane par le mélange d'isocyanate et de polyol ; et
- une zone de moussage (2), où, en utilisation, les lattes sont amenées à transiter afin de recevoir la mousse de polyuréthane en provenance du système (10) de production et de distribution de mousse de polyuréthane,
dans laquelle le système (10) de production et de distribution de mousse de polyuréthane comprend deux têtes de moussage (11 ; 12) séparées, dans laquelle une première tête de moussage (11) est reliée fluidiquement à un réservoir d'isocyanate (33) et à un réservoir de polyol de basse densité (31) pour produire et distribuer une mousse de polyuréthane de basse densité, et dans laquelle une seconde tête de moussage (12) est reliée fluidiquement à un réservoir d'isocyanate (33) et à un réservoir de polyol de haute densité (32) pour produire et distribuer une mousse de polyuréthane de haute densité,
**caractérisée en ce que** ladite installation (1) comprend un système (20) pour déplacer lesdites deux têtes de moussage (11 ; 12) distinctes à l'intérieur de ladite installation (1), dans laquelle ledit système de déplacement (20) est apte à positionner, au niveau de ladite zone de moussage (2), de manière alternative l'une desdites deux têtes de moussage (11 ; 12) selon les exigences de moussage des lattes en transit à travers ladite zone de moussage (2).

2. Installation (1) selon la revendication 1, dans laquelle ledit système de déplacement (20) est apte à déplacer les deux têtes de moussage (11 ; 12) simultanément et de telle manière que, lorsque l'une des deux têtes de moussage (11 ; 12) est positionnée au niveau de ladite zone de moussage (2), l'autre tête de moussage (12 ; 11) soit positionnée au niveau d'une zone de service (3, 4), qui est à l'intérieur de l'installation (1) et est dédiée à la maintenance de la tête de moussage (11, 12).

3. Installation (1) selon la revendication 2, dans laquelle ladite installation (1) comprend deux zones de service (3, 4) distinctes, dans laquelle une première zone de service (3) est destinée à recevoir ladite première tête de moussage (11) et une seconde zone de service (4) est destinée à recevoir ladite seconde tête de moussage (12).

4. Installation (1) selon la revendication 3, dans laquelle ladite zone de moussage (2) est placée entre lesdites deux zones de service (3, 4) distinctes et dans laquelle lesdites deux zones de service (3, 4) distinctes sont placées sur des côtés opposés de ladite zone de moussage (2) par rapport à une direction de transit (X) des lattes à travers ladite zone de moussage (2).

5. Installation (1) selon la revendication 4, dans laquelle lesdites deux zones de service (3, 4) distinctes sont sensiblement alignées l'une avec l'autre et avec ladite zone de moussage (2) dans une direction (Y) transversale à ladite direction de transit (X).

6. Installation (1) selon la revendication 5, dans laquelle le système (20) de déplacement desdites deux têtes de moussage (11 ; 12) distinctes comprend une structure de support mobile (21) à laquelle lesdites deux têtes de moussage (11, 12) sont toutes les deux associées et qui est déplaçable au-dessus de ladite zone de moussage (2) et desdites deux zones de service (3, 4) dans ladite direction transversale (Y), et dans laquelle lesdites deux têtes de moussage (11, 12) sont associées à ladite structure de support mobile (21) à deux positions espacées l'une de l'autre selon ladite direction transversale (Y).

7. Installation (1) selon la revendication 6, dans laquelle le système (20) de déplacement desdites deux têtes de moussage (11 ; 12) distinctes comprend des moyens (22) de déplacement vertical desdites deux têtes de moussage (11 ; 12) distinctes par rapport à ladite structure de support mobile (21) de sorte que lesdites deux têtes de moussage (11 ; 12) puissent être levées ou abaissées lorsqu'elles sont positionnées au-dessus de la zone de moussage (2) ou de la zone de service (3, 4) respective.

8. Installation (1) selon l'une quelconque des revendications précédentes, dans laquelle les deux têtes de moussage (11 ; 12) sont reliées fluidiquement au même réservoir d'isocyanate (33).

9. Installation (1) selon l'une quelconque des revendications 1 à 8, dans laquelle chacune des deux têtes de moussage (11 ; 12) est indépendamment reliée fluidiquement à son propre réservoir d'isocyanate (33).
